# FASCICULE DE BREVET EUROPEEN

(11) **EP 4 497 690 B1**
(45) Date de publication et mention de la délivrance du brevet: **03.09.2025**
(21) Numéro de dépôt: 24186311.7
(22) Date de dépôt: 03.07.2024
(51) Int. Cl.: B64D 35/08, B64D 27/30, B64D 35/021

(54) **ENSEMBLE DE PROPULSION COMPRENANT AU MOINS UN MOTEUR ÉLECTRIQUE ET UN SYSTÈME D'ACCOUPLEMENT POSITIONNÉS DE PART ET D'AUTRE D'UN SYSTÈME DE TRANSMISSION**
ANTRIEBSANORDNUNG MIT MINDESTENS EINEM ELEKTROMOTOR UND EINEM KUPPLUNGSSYSTEM, DIE AUF BEIDEN SEITEN EINER GETRIEBEANORDNUNG ANGEORDNET SIND
DRIVE ARRANGEMENT HAVING AT LEAST ONE ELECTRIC MOTOR AND A COUPLING ARRANGEMENT POSITIONED ON BOTH SIDES OF A TRANSMISSION ARRANGEMENT

(30) Priorité: 24.07.2023 FR 2307920
(43) Date de publication de la demande: 29.01.2025
(73) Titulaire: AIRBUS OPERATIONS (S.A.S.), 31060 Toulouse (FR)
(72) Inventeur: AMARGIER, Rémi, TOULOUSE (FR); ALLIAS, Jean-François, TOULOUSE (FR)
(74) Mandataire: Airbus-OPS SAS

(56) Documents cités:
- WO-A1-2022/171945
- US-A1- 2023 017 954
- US-A1- 2023 021 085

## Description

La présente demande se rapporte à un ensemble de propulsion comprenant au moins un moteur électrique et un système d'accouplement positionnés de part et d'autre d'un système de transmission ainsi qu'à un aéronef comprenant au moins un tel ensemble de propulsion. Selon un mode de réalisation visible sur la figure 1, un aéronef 10 comprend un fuselage 12, au moins une voilure 14 reliée au fuselage 12 ainsi que des ensembles de propulsion 16 reliés à la voilure 14 et disposés de part et d'autre du fuselage 12. Comme illustré sur les figures 2 et 3, chaque ensemble de propulsion 16 comprend une hélice 18 qui présente un axe de rotation A18.

Pour la suite de la description, une direction longitudinale est parallèle à l'axe de rotation A18 de l'hélice 18. Les notions « avant » et « arrière » font référence au sens d'écoulement de l'air par rapport à l'aéronef en vol, l'air s'écoulant selon la direction longitudinale, de l'avant vers l'arrière.

Un ensemble de propulsion de type électrique comprend plusieurs moteurs électriques 20 ainsi qu'un système de transmission 22, comme une boîte de vitesse par exemple, configuré pour accoupler les moteurs électriques 20 à l'hélice 18.

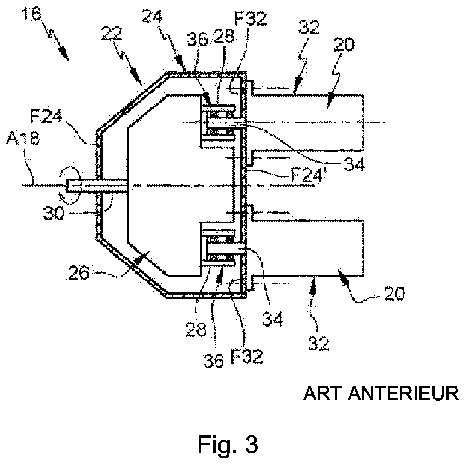

Comme illustré sur la figure 3, le système de transmission 22 comprend un premier boîtier 24 qui présente, selon la direction longitudinale, une paroi avant F24 orientée vers l'hélice 18 et une paroi arrière F24' sur laquelle sont fixés les moteurs électriques 20 ainsi qu'au moins une chaîne cinématique 26 positionnée dans le premier boîtier 24 qui présente au moins une entrée 28 pour chaque moteur électrique 20 et une sortie 30, sous la forme d'un arbre de sortie, traversant la paroi avant F24 pour être accouplée à l'hélice 18.

Chaque moteur électrique 20 présente un deuxième boîtier 32 qui comprend une face d'appui F32, fixée contre la paroi arrière F24' du premier boîtier 24, ainsi qu'un arbre de sortie 34, en saillie par rapport à la face d'appui F32, traversant la paroi arrière F24' du premier boîtier 24. Cet arbre de sortie 34 est accouplé avec l'une des entrées 28 de la chaîne cinématique 26 du système de transmission 22 par un système d'accouplement 36 positionné dans le premier boîtier 24 du système de transmission 22.

Selon un mode de réalisation, chaque système d'accouplement 36 comprend une roue libre configurée pour occuper un état accouplé dans lequel l'arbre de sortie 34 du moteur électrique 20 correspondant est accouplé en rotation et transmet un mouvement de rotation à la chaîne cinématique 26 du système de transmission 22 ainsi qu'un état désaccouplé, en cas d'incident par exemple, dans lequel l'arbre de sortie 34 du moteur électrique 20 correspondant n'est plus accouplé à la chaîne cinématique 26 du système de transmission 22 et ne lui transmet plus de mouvement de rotation.

De la sorte, si un moteur électrique 20 ne fonctionne plus et que son arbre de sortie 34 est bloqué en rotation, le système d'accouplement 36 permet de l'isoler de la chaîne cinématique 26 qui reste opérationnelle et transmet les mouvements de rotation des autres moteurs électriques 20 à l'hélice 18.

Les systèmes d'accouplement 36 nécessitent des opérations de maintenance plus fréquentes que les autres éléments du système de transmission 22. Pour chacune d'elles, le système de transmission 22 doit être déposé, ce qui implique de démonter les moteurs électriques 20, et son boîtier 24 doit être ouvert afin d'accéder aux systèmes d'accouplement 36. Ces différentes étapes sont relativement longues, fastidieuses et coûteuses.

Les documents WO 2022/171945 A1, US 2023/017954 A1 et US 2023/021085 A1 décrivent des ensembles de propulsion selon l'art antérieur.

La présente invention vise à remédier à tout ou partie des inconvénients de l'art antérieur.

A cet effet, l'invention a pour objet un ensemble de propulsion comportant un système de propulsion, au moins un moteur électrique ainsi qu'un système de transmission accouplé au système de propulsion, le système de transmission comprenant des première et deuxième parois transversales qui délimitent une zone intérieure située entre les première et deuxième parois transversales, une première zone extérieure séparée de la zone intérieure par la première paroi transversale ainsi qu'une deuxième zone extérieure séparée de la zone intérieure par la deuxième paroi transversale, le moteur électrique étant relié à la première paroi transversale et positionné dans la première zone extérieure, ledit moteur électrique présentant une sortie accouplée par un dispositif d'accouplement à une entrée du système de transmission positionnée dans la zone intérieure.

Selon l'invention, le dispositif d'accouplement comprend :
- un premier arbre d'accouplement accouplé à la sortie du moteur électrique, traversant le système de transmission et présentant une première extrémité en saillie dans la deuxième zone extérieure,
- un deuxième arbre d'accouplement accouplé à l'entrée du système de transmission, traversant au moins la deuxième paroi transversale et présentant une première extrémité en saillie dans la deuxième zone extérieure,
- un système d'accouplement configuré pour accoupler en rotation les premières extrémités des premier et deuxième arbres d'accouplement, positionné dans la deuxième zone extérieure.

Selon l'invention, le système d'accouplement est positionné à l'extérieur du système de transmission. Par conséquent, il n'est plus nécessaire de déposer le système de transmission et de le démonter pour assurer une opération de maintenance du système d'accouplement, ce qui permet d'augmenter la durée entre deux opérations de maintenance du système de transmission. Le fait de disposer le moteur électrique et le système d'accouplement qui lui est associé de part et d'autre du système de transmission permet d'obtenir un ensemble plus compact.

Selon une autre caractéristique, le deuxième arbre d'accouplement est creux et configuré pour loger le premier arbre d'accouplement.

Selon une autre caractéristique, les premier et deuxième arbres d'accouplement sont coaxiaux.

Selon une autre caractéristique, le système d'accouplement est positionné à l'intérieur du deuxième arbre d'accouplement.

Selon une autre caractéristique, le dispositif d'accouplement comprend un bouchon configuré pour obturer la première extrémité du deuxième arbre d'accouplement, relié par une liaison démontable au deuxième arbre d'accouplement.

Selon un premier mode de réalisation, le moteur électrique comprend un arbre de sortie traversant le système de transmission, l'arbre de sortie et le premier arbre d'accouplement du dispositif d'accouplement ne formant qu'un seul et même arbre.

Selon un deuxième mode de réalisation, le moteur électrique comprend un arbre de sortie positionné dans la première zone extérieure. En complément, le premier arbre d'accouplement du dispositif d'accouplement et l'arbre de sortie du moteur électrique sont deux arbres distincts, le premier arbre d'accouplement comportant une deuxième extrémité positionnée dans la première zone extérieure et accouplée à l'arbre de sortie du moteur électrique.

Selon une autre caractéristique, le deuxième arbre d'accouplement comprend une deuxième extrémité qui coopère avec la première paroi transversale. En complément, l'ensemble de propulsion comprend une liaison pivotante comprenant un premier guidage en rotation intercalé entre un tronçon du deuxième arbre d'accouplement et la deuxième paroi transversale ainsi qu'un deuxième guidage en rotation intercalé entre la deuxième extrémité du deuxième arbre d'accouplement et la première paroi transversale.

Selon une autre caractéristique, le système de propulsion est positionné dans la deuxième zone extérieure.

Selon une autre caractéristique, le système d'accouplement est débrayable et configuré pour occuper un état accouplé dans lequel la sortie du moteur électrique est accouplée en rotation et transmet un mouvement de rotation à l'entrée du système de transmission ainsi qu'un état désaccouplé dans lequel la sortie du moteur électrique n'est plus accouplée à l'entrée du système de transmission et ne lui transmet plus de mouvement de rotation.

Selon une autre caractéristique, le système d'accouplement est configuré pour passer de l'état accouplé à l'état désaccouplé dès qu'un couple transmis via le système d'accouplement dépasse un seuil donné ou n'est plus dans une plage donnée.

Selon une autre caractéristique, le système d'accouplement comprend une roue libre configurée pour occuper un état accouplé en rotation dans lequel le premier arbre d'accouplement est accouplé en rotation et transmet un mouvement de rotation au deuxième arbre d'accouplement ainsi qu'un état désaccouplé dans lequel le premier arbre d'accouplement n'est plus accouplé en rotation au deuxième arbre d'accouplement et ne lui transmet plus de mouvement de rotation.

L'invention a également pour objet un aéronef comportant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :

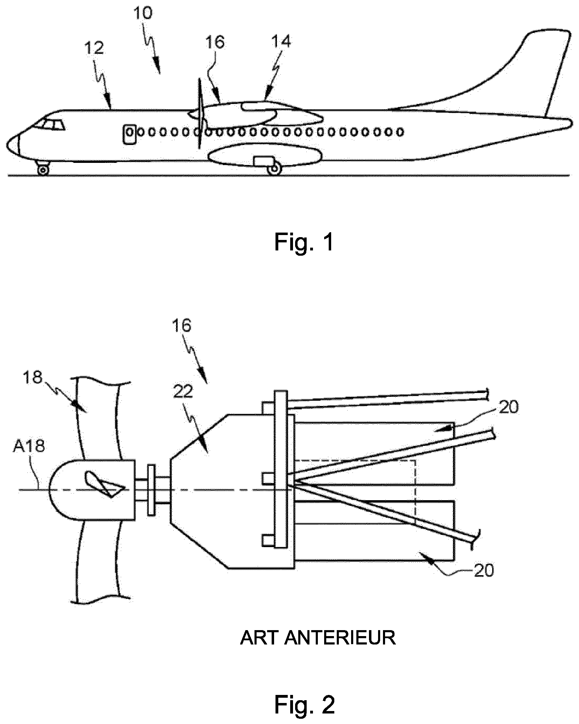

- La figure 1 est une vue latérale d'un aéronef,
- La figure 2 est une vue schématique latérale d'un ensemble de propulsion électrique illustrant un mode de réalisation de l'art antérieur,
- La figure 3 est une coupe schématique d'un système de transmission et des moteurs électriques d'un ensemble de propulsion illustrant un mode de réalisation de l'art antérieur,

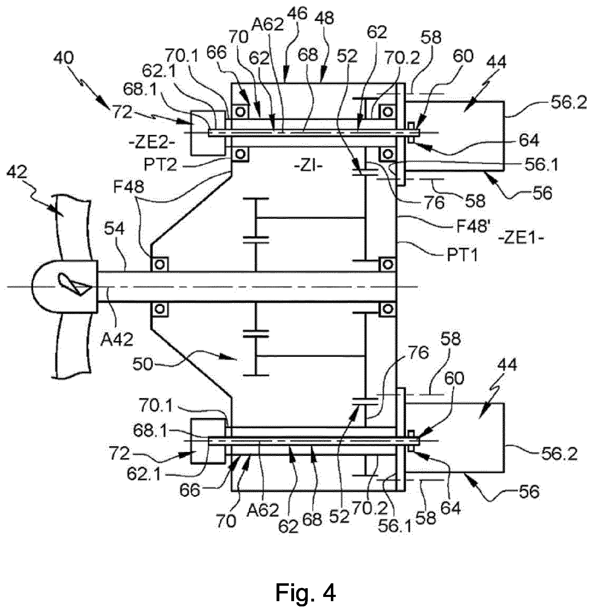

- La figure 4 est une coupe schématique d'une partie d'un ensemble de propulsion illustrant un mode de réalisation de l'invention,

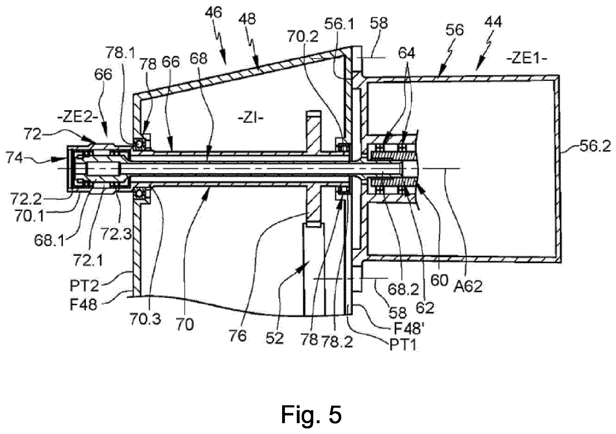

- La figure 5 est une coupe d'une partie d'un système de transmission, d'un moteur électrique et d'un système d'accouplement illustrant un mode de réalisation de l'invention.

Selon un mode de réalisation visible sur la figure 4, un ensemble de propulsion 40 de type électrique comprend une hélice 42 qui présente un axe de rotation A42, plusieurs moteurs électriques 44 ainsi qu'un système de transmission 46, comme une boîte de vitesse par exemple, configuré pour accoupler les moteurs électriques 44 à l'hélice 42.

Selon une application, un aéronef comprend au moins un tel ensemble de propulsion 40. Bien entendu, l'invention n'est pas limitée à cette application. Quelle que soit l'application, l'ensemble de propulsion 40 de type électrique comprend un système de propulsion, comme une hélice par exemple, plusieurs moteurs électriques 44 ainsi qu'un système de transmission 46 configuré pour accoupler les moteurs électriques 44 au système de propulsion.

Selon une configuration visible sur la figure 4, le système de transmission 46 comprend un premier boîtier 48 qui présente, selon la direction longitudinale, une paroi avant F48 orientée vers le système de propulsion et une paroi arrière F48', sur laquelle sont fixés les moteurs électriques 44, ainsi qu'au moins une chaîne cinématique 50 positionnée dans le premier boîtier 48 qui présente au moins une entrée 52 pour chaque moteur électrique 44 et une sortie 54, sous la forme d'un arbre de sortie, traversant la paroi avant F48 pour être accouplée au système de propulsion. Selon une configuration visible sur la figure 4, l'entrée 52 du système de transmission 46 est un pignon. Bien entendu, l'invention n'est pas limitée à ce mode de réalisation. Ainsi, l'entrée 52 du système de transmission 46 pourrait être un arbre creux ou tout autre élément permettant un accouplement et la transmission d'un mouvement de rotation.

Chaque moteur électrique 44 comprend un deuxième boîtier 56 qui présente une première face 56.1 orientée vers le système de transmission 46 ainsi qu'une deuxième face 56.2 opposée à la première face 56.1 et au système de transmission 46. L'ensemble de propulsion 40 comprend, pour chaque moteur électrique 44, des éléments de liaison 58 permettant de fixer le moteur électrique 44 sur le premier boîtier 48 du système de transmission 46. A titre d'exemple, les éléments de liaison 58 sont des vis, qui traversent des pattes solidaires du deuxième boîtier 56 du moteur électrique 44, se vissant chacune dans un trou taraudé solidaire du premier boîtier 48 du système de transmission 46. Bien entendu, l'invention n'est pas limitée à ce mode de réalisation pour les éléments de liaison 58.

Selon un agencement, au moins un moteur électrique 44 est positionné contre la paroi arrière F48' du premier boîtier 48 du système de transmission 46 et relié à la paroi arrière F48' par les éléments de liaison 58.

Selon un autre agencement, au moins un moteur électrique 44 est positionné contre la paroi avant F48 du premier boîtier 48 du système de transmission 46 et relié à la paroi avant F48 par les éléments de liaison 58.

Quel que soit l'agencement, le système de transmission (plus particulièrement son premier boîtier 48) comprend une première paroi transversale PT1 parmi les parois avant et arrière F48, F48' ainsi qu'une deuxième paroi transversale PT2, différente de la première paroi transversale PT1, parmi les parois avant et arrière F48, F48'. Les première et deuxième parois transversales PT1, PT2 délimitent une zone intérieure ZI située entre les première et deuxième parois transversales PT1, PT2, une première zone extérieure ZE1 séparée de la zone intérieure ZI par la première paroi transversale PT1 ainsi qu'une deuxième zone extérieure ZE2 séparée de la zone intérieure ZI par la deuxième paroi transversale PT2. Au moins un moteur électrique 44 est relié à la première paroi transversale PT1 et positionné dans la première zone extérieure ZE1, ledit moteur électrique 44 présentant une sortie 60 accouplée à une entrée 52 du système de transmission 46 positionnée dans la zone intérieure ZI .

Chaque moteur électrique 44 comprend une sortie 60, comme un arbre de sortie 62 par exemple relié au deuxième boîtier 56 par une liaison pivotante 64, qui présente un axe de pivotement A62.

Selon un agencement, l'axe de pivotement A62 de l'arbre de sortie 62 est sensiblement parallèle à la direction longitudinale. Les première et deuxième faces 56.1, 56.2 sont sensiblement perpendiculaires à l'axe de pivotement A62 et décalées l'une par rapport à l'autre selon la direction longitudinale.

Selon une configuration visible sur la figure 4, l'arbre de sortie 62 s'étend à partir de la première face 56.1, traverse le système de transmission 46, notamment les parois avant et arrière F48, F48' du premier boîtier 48, et présente une extrémité libre 62.1 en saillie par rapport à la paroi avant F48, décalée vers l'avant par rapport à ladite paroi avant F48.

Selon une autre configuration visible sur la figure 5, l'arbre de sortie 62 est creux et décalé vers l'arrière par rapport à la première face 56.1 du deuxième boîtier 56 et la paroi arrière F48' du premier boîtier 48.

Bien entendu, la sortie 60 du moteur électrique 44 n'est pas limitée à ces configurations. Ainsi, la sortie 60 du moteur électrique 44 pourrait être un pignon ou tout autre élément permettant un accouplement et la transmission d'un mouvement de rotation.

L'ensemble de propulsion 40 comprend au moins un dispositif d'accouplement 66 reliant la sortie 60 d'un des moteurs électriques 44 situé dans la première zone extérieure ZE1 et l'entrée 52 du système de transmission 46, configuré pour transmettre un mouvement de rotation entre la sortie 60 et l'entrée 52.

Ce dispositif d'accouplement 66 comprend :
- un premier arbre d'accouplement 68 accouplé à la sortie 60 du moteur électrique 44, traversant le premier boîtier 48 et présentant une première extrémité 68.1 en saillie dans la deuxième zone extérieure ZE2,
- un deuxième arbre d'accouplement 70 accouplé à l'entrée 52 du système de transmission 46, traversant au moins la deuxième paroi transversale PT2 du premier boîtier 48 et présentant une première extrémité 70.1 en saillie dans la deuxième zone extérieure ZE2,
- un système d'accouplement 72 configuré pour accoupler en rotation les premières extrémités 68.1, 70.1 des premier et deuxième arbres d'accouplement 68 70, positionné dans la deuxième zone extérieure ZE2.

Selon une configuration, l'ensemble de propulsion 40 comprend un dispositif d'accouplement 66 pour chaque moteur électrique 44 qu'il soit positionné dans la première zone extérieure ZE1 ou dans la deuxième zone extérieure ZE2.

Le système d'accouplement 72 est débrayable et configuré pour occuper un état accouplé dans lequel la sortie 60 du moteur électrique 44 est accouplée en rotation et transmet un mouvement de rotation à l'entrée 52 du système de transmission 46 ainsi qu'un état désaccouplé, en cas d'incident par exemple, dans lequel la sortie 60 du moteur électrique 44 n'est plus accouplée à l'entrée 52 du système de transmission 46 et ne lui transmet plus de mouvement de rotation. Le système d'accouplement 72 passe de l'état accouplé à l'état désaccouplé, en cas d'incident par exemple, dès qu'un couple transmis via le système d'accouplement 72 dépasse un seuil donné ou n'est plus dans une plage donnée.

De la sorte, si le moteur électrique 44 accouplé au système d'accouplement 72 ne fonctionne plus et que son arbre de sortie 62 est bloqué en rotation par exemple, le système d'accouplement 72 permet de l'isoler du système de transmission 46 qui reste opérationnel et transmet les mouvements de rotation des autres moteurs électriques au système de propulsion.

Selon un mode de réalisation, le système d'accouplement 72 comprend une roue libre 72.1 configurée pour occuper un état accouplé en rotation dans lequel le premier arbre d'accouplement 68 est accouplé en rotation et transmet un mouvement de rotation au deuxième arbre d'accouplement 70 ainsi qu'un état désaccouplé, en cas d'incident par exemple, dans lequel le premier arbre d'accouplement 68 n'est plus accouplé en rotation au deuxième arbre d'accouplement 70 et ne lui transmet plus de mouvement de rotation.

Selon une configuration, le système d'accouplement 72 comprend des premier et deuxième guidages en rotation 72.2, 72.3 positionnés de part et d'autre de la roue libre 72.1. Cette dernière comprend une bague présentant une surface intérieure qui coopère avec le premier arbre d'accouplement 68 ainsi qu'une surface extérieure qui coopère avec le deuxième arbre d'accouplement 70, au moins l'une des surfaces parmi les surfaces intérieure et extérieure étant accouplée par friction avec le premier ou deuxième arbre d'accouplement 68, 70.

La roue libre 72.1 étant située à l'extérieur du premier boîtier 48 du système de transmission 46, les éventuelles poussières générées par l'accouplement par friction de la roue libre 72.1 ne polluent pas l'intérieur du système de transmission 46, limitant ainsi les risques de dégradation prématurée des composants du système de transmission 46.

Pour obtenir un ensemble plus compact, pour au moins un moteur électrique 44, le deuxième arbre d'accouplement 70 est creux et configuré pour loger le premier arbre d'accouplement 68. Selon un agencement, les premier et deuxième arbres d'accouplement 68, 70 sont coaxiaux.

Selon un agencement, le système d'accouplement 72 est positionné à l'intérieur du deuxième arbre d'accouplement 70, entre des premières extrémités 68.1, 70.1 des premier et deuxième arbres d'accouplement 68, 70, ce qui permet de le protéger.

En complément, le dispositif d'accouplement 66 comprend un bouchon 74 configuré pour obturer la première extrémité 70.1 du deuxième arbre d'accouplement 70, relié par une liaison démontable au deuxième arbre d'accouplement 70. Ce mode de réalisation permet de renforcer la protection du système d'accouplement 72.

Selon un premier mode de réalisation visible sur la figure 4, l'arbre de sortie 62 du moteur électrique 44 et le premier arbre d'accouplement 68 du dispositif d'accouplement 66 ne forment qu'un seul et même arbre. Cet arbre peut être creux ou plein.

Selon un deuxième mode de réalisation visible sur la figure 5, l'arbre de sortie 62 du moteur électrique 44 est positionné dans la première zone extérieure ZE1 et distinct du premier arbre d'accouplement 68 du dispositif d'accouplement 66. Selon ce mode de réalisation, le premier arbre d'accouplement 68 comprend une deuxième extrémité 68.2 positionnée dans la première zone extérieure ZE1 et accouplée à l'arbre de sortie 62 du moteur électrique 44. Selon un mode de réalisation, l'arbre de sortie 62 du moteur électrique 44 est creux et configuré pour recevoir la deuxième extrémité 68.2 du premier arbre d'accouplement 68. A titre d'exemple, la deuxième extrémité 68.2 et l'arbre de sortie 62 sont cannelés. D'autres solutions sont envisageables pour accoupler l'arbre de sortie 62 du moteur électrique 44 et le premier arbre d'accouplement 68 du dispositif d'accouplement 66.

Selon un mode de réalisation, le dispositif d'accouplement 66 comprend un pignon 76 solidaire du deuxième arbre d'accouplement 70 et fixe par rapport à ce dernier, qui coopère avec un pignon ou une couronne de l'entrée 52 du système de transmission 46.

Selon un agencement, l'ensemble de propulsion 40 comprend une liaison pivotante 78 reliant le deuxième arbre d'accouplement 70 et le premier boîtier 48 du système de transmission 46. Selon un mode de réalisation, le deuxième arbre d'accouplement 70 comprend une deuxième extrémité 70.2 qui coopère avec la première paroi transversale PT1. En complément, la liaison pivotante 78 comprenant un premier guidage en rotation 78.1, comme un roulement par exemple, intercalé entre un tronçon 70.3 du deuxième arbre d'accouplement 70 et la deuxième paroi transversale PT2 ainsi qu'un deuxième guidage en rotation 78.2, comme un roulement par exemple, intercalé entre la deuxième extrémité 70.2 du deuxième arbre d'accouplement 70 et la première paroi transversale PT1.

Selon une première configuration, les moteurs électriques 44 sont tous positionnés contre la paroi arrière F48' du système de transmission 46 et le système d'accouplement 72 de chacun d'eux est positionné à l'avant de la paroi avant F48 du système de transmission 46, dans la deuxième zone extérieure ZE2 dans laquelle est positionné le système de propulsion.

Selon une autre configuration, au moins un moteur électrique 44 est positionné contre la paroi avant F48 du système de transmission 46 et le système d'accouplement 72 qui lui est associé est positionné à l'arrière de la paroi arrière F48'.

Quel que soit le mode de réalisation, le système d'accouplement 72 est positionné à l'extérieur du premier boîtier 48 du système de transmission 46. Par conséquent, il n'est plus nécessaire de déposer le système de transmission 46 et de le démonter pour assurer une opération de maintenance du système d'accouplement 72, ce qui permet d'augmenter la durée entre deux opérations de maintenance du système de transmission 46. Le fait de disposer le moteur électrique 44 et le système d'accouplement 72 qui lui est associé de part et d'autre du système de transmission 46 permet d'obtenir un ensemble plus compact. Par ailleurs, lorsque le système d'accouplement 72 est positionné à l'avant du système de transmission, il est plus accessible, ce qui facilite les opérations de maintenance.

## Revendications

1. Ensemble de propulsion comportant un système de propulsion, au moins un moteur électrique (44), un dispositif d'accouplement (66) ainsi qu'un système de transmission (46) accouplé au système de propulsion, le système de transmission (46) comprenant des première et deuxième parois transversales (PT1) qui délimitent une zone intérieure (ZI) située entre les première et deuxième parois transversales (PT1, PT2), une première zone extérieure (ZE1) séparée de la zone intérieure (ZI) par la première paroi transversale (PT1) ainsi qu'une deuxième zone extérieure (ZE2) séparée de la zone intérieure (ZI) par la deuxième paroi transversale (PT2), le moteur électrique (44) étant relié à la première paroi transversale (PT1) et positionné dans la première zone extérieure (ZE1), ledit moteur électrique (44) présentant une sortie (60) accouplée par le dispositif d'accouplement (66) à une entrée (52) du système de transmission (46) positionnée dans la zone intérieure (ZI) ; **caractérisé en ce que** le dispositif d'accouplement (66) comprend :
- un premier arbre d'accouplement (68) accouplé à la sortie (60) du moteur électrique (44), traversant le système de transmission (46) et présentant une première extrémité (68.1) en saillie dans la deuxième zone extérieure (ZE2),
- un deuxième arbre d'accouplement (70) accouplé à l'entrée (52) du système de transmission (46), traversant au moins la deuxième paroi transversale (PT2) et présentant une première extrémité (70.1) en saillie dans la deuxième zone extérieure (ZE2),
- un système d'accouplement (72) configuré pour accoupler en rotation les premières extrémités (68.1, 70.1) des premier et deuxième arbres d'accouplement (68 70), positionné dans la deuxième zone extérieure (ZE2).

2. Ensemble de propulsion selon la revendication précédente, **caractérisé en ce que** le deuxième arbre d'accouplement (70) est creux et configuré pour loger le premier arbre d'accouplement (68).

3. Ensemble de propulsion selon la revendication précédente, **caractérisé en ce que** les premier et deuxième arbres d'accouplement (68, 70) sont coaxiaux.

4. Ensemble de propulsion selon l'une des revendications 2 à 3, **caractérisé en ce que** le système d'accouplement (72) est positionné à l'intérieur du deuxième arbre d'accouplement (70).

5. Ensemble de propulsion selon la revendication précédente, **caractérisé en ce que** le dispositif d'accouplement (66) comprend un bouchon (74) configuré pour obturer la première extrémité (70.1) du deuxième arbre d'accouplement (70), relié par une liaison démontable au deuxième arbre d'accouplement (70).

6. Ensemble de propulsion selon l'une des revendications précédentes, **caractérisé en ce que** le moteur électrique (44) comprend un arbre de sortie (62) traversant le système de transmission (46) et **en ce que** l'arbre de sortie (62) et le premier arbre d'accouplement (68) du dispositif d'accouplement (66) ne forment qu'un seul et même arbre.

7. Ensemble de propulsion selon l'une des revendications 1 à 5, **caractérisé en ce que** le moteur électrique (44) comprend un arbre de sortie (62) positionné dans la première zone extérieure (ZE1) et **en ce que** le premier arbre d'accouplement (68) du dispositif d'accouplement (66) et l'arbre de sortie (62) du moteur électrique (44) sont deux arbres distincts, le premier arbre d'accouplement (68) comportant une deuxième extrémité (68.2) positionnée dans la première zone extérieure (ZE1) et accouplée à l'arbre de sortie (62) du moteur électrique (44).

8. Ensemble de propulsion selon l'une des revendications précédentes, **caractérisé en ce que** le deuxième arbre d'accouplement (70) comprend une deuxième extrémité (70.2) qui coopère avec la première paroi transversale (PT1) et **en ce que** l'ensemble de propulsion (40) comprend une liaison pivotante (78) comprenant un premier guidage en rotation (78.1) intercalé entre un tronçon (70.3) du deuxième arbre d'accouplement (70) et la deuxième paroi transversale (PT2) ainsi qu'un deuxième guidage en rotation (78.2) intercalé entre la deuxième extrémité (70.2) du deuxième arbre d'accouplement (70) et la première paroi transversale (PT1).

9. Ensemble de propulsion selon l'une des revendications précédentes, **caractérisé en ce que** le système de propulsion est positionné dans la deuxième zone extérieure (ZE2).

10. Ensemble de propulsion selon l'une des revendications précédentes, **caractérisé en ce que** le système d'accouplement (72) est débrayable et configuré pour occuper un état accouplé dans lequel la sortie (60) du moteur électrique (44) est accouplée en rotation et transmet un mouvement de rotation à l'entrée (52) du système de transmission (46) ainsi qu'un état désaccouplé dans lequel la sortie (60) du moteur électrique (44) n'est plus accouplée à l'entrée (52) du système de transmission (46) et ne lui transmet plus de mouvement de rotation.

11. Ensemble de propulsion selon l'une des revendications précédentes, **caractérisé en ce que** le système d'accouplement (72) comprend une roue libre (72.1) configurée pour occuper un état accouplé en rotation dans lequel le premier arbre d'accouplement (68) est accouplé en rotation et transmet un mouvement de rotation au deuxième arbre d'accouplement (70) ainsi qu'un état désaccouplé dans lequel le premier arbre d'accouplement (68) n'est plus accouplé en rotation au deuxième arbre d'accouplement (70) et ne lui transmet plus de mouvement de rotation.

12. Aéronef comportant au moins un ensemble de propulsion selon l'une des revendications précédentes.

## Patentansprüche

1. Antriebsanordnung mit einem Antriebssystem, mindestens einem Elektromotor (44), einer Kupplungsvorrichtung (66) sowie einem mit dem Antriebssystem gekoppelten Getriebesystem (46), wobei das Getriebesystem (46) eine erste und eine zweite Querwand (PT1) aufweist, die einen Innenbereich (ZI) zwischen der ersten und der zweiten Querwand (PT1, PT2) begrenzen, einen ersten Außenbereich (ZE1), der durch die erste Querwand (PT1) vom Innenbereich (ZI) getrennt ist, sowie einen zweiten Außenbereich (ZE2), der durch die zweite Querwand (PT2) vom Innenbereich (ZI) getrennt ist, wobei der Elektromotor (44) mit der ersten Querwand (PT1) verbunden und im ersten Außenbereich (ZE1) positioniert ist, wobei der Elektromotor (44) einen Ausgang (60) aufweist, der über die Kupplungsvorrichtung (66) mit einem Eingang (52) des Getriebesystems (46) gekoppelt ist, der im Innenbereich (ZI) positioniert ist; **dadurch gekennzeichnet, dass** die Kupplungsvorrichtung (66) Folgendes aufweist:
- eine erste Kupplungswelle (68), die mit dem Ausgang (60) des Elektromotors (44) gekoppelt ist, das Getriebesystem (46) durchquert und ein erstes Ende (68.1) aufweist, das in den zweiten Außenbereich (ZE2) hineinragt,
- eine zweite Kupplungswelle (70), die mit dem Eingang (52) des Getriebesystems (46) gekoppelt ist, mindestens die zweite Querwand (PT2) durchquert und ein erstes Ende (70.1) aufweist, das in den zweiten Außenbereich (ZE2) hineinragt,
- ein Kupplungssystem (72), das so konfiguriert ist, dass es die ersten Enden (68.1, 70.1) der ersten und zweiten Kupplungswelle (68, 70) drehbar miteinander verbindet und im zweiten Außenbereich (ZE2) positioniert ist.

2. Antriebsanordnung nach dem vorhergehenden Anspruch, **dadurch gekennzeichnet, dass** die zweite Kupplungswelle (70) hohl ist und so ausgebildet ist, dass sie die erste Kupplungswelle (68) aufnehmen kann.

3. Antriebsanordnung nach dem vorhergehenden Anspruch, **dadurch gekennzeichnet, dass** die erste und die zweite Kupplungswelle (68, 70) koaxial sind.

4. Antriebsanordnung nach einem der Ansprüche 2 bis 3, **dadurch gekennzeichnet, dass** das Kupplungssystem (72) innerhalb der zweiten Kupplungswelle (70) positioniert ist.

5. Antriebsanordnung nach dem vorhergehenden Anspruch, **dadurch gekennzeichnet, dass** die Kupplungsvorrichtung (66) einen Stopfen (74) aufweist, der so konfiguriert ist, dass er das erste Ende (70.1) der zweiten Kupplungswelle (70) verschließt, und der durch eine lösbare Verbindung mit der zweiten Kupplungswelle (70) verbunden ist.

6. Antriebsanordnung nach einem der vorhergehenden Ansprüche, **dadurch gekennzeichnet, dass** der Elektromotor (44) eine das Getriebesystem (46) durchquerende Ausgangswelle (62) aufweist und dass die Ausgangswelle (62) und die erste Kupplungswelle (68) der Kupplungsvorrichtung (66) eine einzige Welle bilden.

7. Antriebsanordnung nach einem der Ansprüche 1 bis 5, **dadurch gekennzeichnet, dass** der Elektromotor (44) eine im ersten Außenbereich (ZE1) angeordnete Ausgangswelle (62) aufweist und dass die erste Kupplungswelle (68) der Kupplungsvorrichtung (66) und die Ausgangswelle (62) des Elektromotors (44) zwei getrennte Wellen sind, wobei die erste Kupplungswelle (68) ein zweites Ende (68.2) aufweist, das im ersten Außenbereich (ZE1) positioniert und mit der Ausgangswelle (62) des Elektromotors (44) gekoppelt ist.

8. Antriebsanordnung nach einem der vorhergehenden Ansprüche, **dadurch gekennzeichnet, dass** die zweite Kupplungswelle (70) ein zweites Ende (70.2) aufweist, das mit der ersten Querwand (PT1) zusammenwirkt, und dass die Antriebsanordnung (40) eine Schwenkverbindung (78) mit einer ersten Drehführung (78.1) aufweist, die zwischen einem Abschnitt (70.3) der zweiten Kupplungswelle (70) und der zweiten Querwand (PT2) angeordnet ist, sowie eine zweite Drehführung (78.2), die zwischen dem zweiten Ende (70.2) der zweiten Kupplungswelle (70) und der ersten Querwand (PT1) angeordnet ist.

9. Antriebsanordnung nach einem der vorhergehenden Ansprüche, **dadurch gekennzeichnet, dass** das Antriebssystem in der zweiten Außenbereich (ZE2) positioniert ist.

10. Antriebsanordnung nach einem der vorhergehenden Ansprüche, **dadurch gekennzeichnet, dass** das Kupplungssystem (72) ausrückbar und so konfiguriert ist, dass es einen gekuppelten Zustand einnehmen kann, in dem der Ausgang (60) des Elektromotors (44) drehfest gekoppelt ist und eine Drehbewegung auf den Eingang (52) des Getriebesystems (46) überträgt, sowie einen entkuppelten Zustand, in dem der Ausgang (60) des Elektromotors (44) nicht mehr mit dem Eingang (52) des Getriebesystems (46) gekoppelt ist und keine Drehbewegung mehr auf diesen überträgt.

11. Antriebsanordnung nach einem der vorhergehenden Ansprüche, **dadurch gekennzeichnet, dass** das Kupplungssystem (72) einen Freilauf (72.1) aufweist, der so konfiguriert ist, dass er einen drehfesten Zustand einnehmen kann, in dem die erste Kupplungswelle (68) drehfest gekoppelt ist und eine Drehbewegung auf die zweite Kupplungswelle (70) überträgt, sowie einen entkuppelten Zustand, in dem die erste Kupplungswelle (68) nicht mehr drehfest mit der zweiten Kupplungswelle (70) gekoppelt ist und keine Drehbewegung mehr auf diese überträgt.

12. Flugzeug, das mindestens eine Antriebsanordnung nach einem der vorhergehenden Ansprüche aufweist.

## Claims

1. Propulsion unit comprising a propulsion system, at least one electric motor (44), a coupling device (66), in addition to a transmission system (46) which is coupled to the propulsion system, the transmission system (46) comprising first and second transverse walls (PT1) which delimit an internal zone (ZI) which is located between the first and second transverse walls (PT1, PT2), a first external zone (ZE1) which is separated from the internal zone (ZI) by the first transverse wall (PT1), in addition to a second external zone (ZE2) which is separated from the internal zone (ZI) by the second transverse wall (PT2), the electric motor (44) being connected to the first transverse wall (PT1) and being positioned in the first external zone (ZE1), and said electric motor (44) having an output (60) which is coupled by the coupling device (66) to an input (52) of the transmission system (46) which is positioned in the internal zone (ZI); **characterized in that** the coupling device (66) comprises:
- a first coupling shaft (68) which is coupled to the output (60) of the electric motor (44), passing through the transmission system (46) and having a first end (68.1) protruding into the second external zone (ZE2),
- a second coupling shaft (70) which is coupled to the input (52) of the transmission system (46), passing through at least the second transverse wall (PT2) and having a first end (70.1) protruding into the second external zone (ZE2),
- a coupling system (72) which is configured to couple the first ends (68.1, 70.1) of the first and second coupling shafts (68, 70) in terms of rotation and which is positioned in the second external zone (ZE2).

2. Propulsion unit according to the preceding claim, **characterized in that** the second coupling shaft (70) is hollow and is configured to house the first coupling shaft (68).

3. Propulsion unit according to the preceding claim, **characterized in that** the first and second coupling shafts (68, 70) are coaxial.

4. Propulsion unit according to either of Claims 2 and 3, **characterized in that** the coupling system (72) is positioned inside the second coupling shaft (70).

5. Propulsion unit according to the preceding claim, **characterized in that** the coupling device (66) comprises a plug (74) which is configured to seal the first end (70.1) of the second coupling shaft (70) and which is connected by a releasable connection to the second coupling shaft (70).

6. Propulsion unit according to one of the preceding claims, **characterized in that** the electric motor (44) comprises an output shaft (62) passing through the transmission system (46) and **in that** the output shaft (62) and the first coupling shaft (68) of the coupling device (66) form one and the same shaft.

7. Propulsion unit according to one of Claims 1 to 5, **characterized in that** the electric motor (44) comprises an output shaft (62) which is positioned in the first external zone (ZE1) and **in that** the first coupling shaft (68) of the coupling device (66) and the output shaft (62) of the electric motor (44) are two separate shafts, the first coupling shaft (68) comprising a second end (68.2) which is positioned in the first external zone (ZE1) and which is coupled to the output shaft (62) of the electric motor (44).

8. Propulsion unit according to one of the preceding claims, **characterized in that** the second coupling shaft (70) comprises a second end (70.2) which cooperates with the first transverse wall (PT1) and **in that** the propulsion unit (40) comprises a pivoting connection (78) comprising a first rotating guide (78.1) which is interposed between a portion (70.3) of the second coupling shaft (70) and the second transverse wall (PT2), in addition to a second rotating guide (78.2) which is interposed between the second end (70.2) of the second coupling shaft (70) and the first transverse wall (PT1).

9. Propulsion unit according to one of the preceding claims, **characterized in that** the propulsion system is positioned in the second external zone (ZE2).

10. Propulsion unit according to one of the preceding claims, **characterized in that** the coupling system (72) is able to be disengaged and is configured to adopt a coupled state in which the output (60) of the electric motor (44) is coupled in terms of rotation and transmits a rotational movement to the input (52) of the transmission system (46), in addition to an uncoupled state in which the output (60) of the electric motor (44) is no longer coupled to the input (52) of the transmission system (46) and no longer transmits any rotational movement thereto.

11. Propulsion unit according to one of the preceding claims, **characterized in that** the coupling system (72) comprises a freewheel (72.1) which is configured to adopt a state which is coupled in terms of rotation and in which the first coupling shaft (68) is coupled in terms of rotation and transmits a rotational movement to the second coupling shaft (70), in addition to an uncoupled state in which the first coupling shaft (68) is no longer coupled in terms of rotation to the second coupling shaft (70) and no longer transmits any rotational movement thereto.

12. Aircraft comprising at least one propulsion unit according to one of the preceding claims.
